# EUROPÄISCHE PATENTSCHRIFT

(11) **EP 2 564 078 B1**
(45) Veröffentlichungstag und Bekanntmachung des Hinweises auf die Patenterteilung: **04.06.2025**
(21) Anmeldenummer: 11706476.6
(22) Anmeldetag: 23.02.2011
(51) Int. Cl.: A44B 17/00

(54) **BAUTEILVERBINDUNG**
COMPONENT CONNECTION
LIAISON DE PIÈCES STRUCTURALES

(30) Priorität: 28.04.2010 DE 102010028322; 28.04.2010 DE 102010028323
(43) Veröffentlichungstag der Anmeldung: 06.03.2013
(73) Patentinhaber: Bayerische Motoren Werke Aktiengesellschaft, 80809 München (DE)
(72) Erfinder: HAMMER, Maik, 84174 Eching (DE); VAN NIEKERK, Johann, 80993 München (DE); HERZINGER, Thomas, 80639 München (DE)
(86) Internationale Anmeldenummer: PCT/EP2011/000865
(87) Internationale Veröffentlichungsnummer: WO 2011/134564

(56) Entgegenhaltungen:
- EP-A1- 2 154 054
- CN-Y- 2 887 118
- US-A- 2 275 900
- US-A- 2 337 239
- US-A- 4 637 116
- US-A1- 2008 210 672

## Beschreibung

Die vorliegende Erfindung betrifft eine Bauteilverbindung gemäß dem Oberbegriff des Patentanspruches 1.

Eine Bauteilverbindung gemäß dem Oberbegriff des Patentanspruches 1 ist aus der US 2 337 239 A bekannt. Zum relevanten Stand der Technik zählen ferner die US 2,275,900 A, CN 2337 239 Y, EP 2 154 054 A1, US 4,637,116 A, US 2008/0210672 A1 sowie die ältere, nicht vorveröffentlichte deutsche Patentanmeldung DE 10 2009 049 602.5.

In der Großserienfertigung von Fahrzeugkarosserien werden eine Vielzahl einzelner Karosserieteile sowie Anbauteile, wie z.B. Halterungen etc. weitgehend vollautomatisiert zusammengebaut. Bei einem Fügevorgang werden zwei oder mehrere Karosserieteile zunächst mittels aufwändiger Spann- und Aufnahmetechnik relativ zueinander positioniert und anschließend miteinander verbunden, z.B. durch Schweißen, Clinchen oder andere Fügeverfahren.

Bei der oben erwähnten DE 10 2009 049 602.5 geht es um die lose Vorfixierung zweier fest miteinander zu verbindender Bauteile. An dem einen Bauteil ist ein abstehendes kugelförmiges Formschlusselement vorgesehen, das in eine z.B. schlüssellochartig gestaltete Ausnehmung des zweiten Bauteils eingreift. Die beiden miteinander zu verbindenden Bauteile werden also zusammengesetzt und anschließend relativ zueinander verschoben, wobei sich durch das Verschieben ein Formschluss ergibt. Durch den Formschluss werden die beiden Bauteile relativ zueinander vorfixiert und können anschließend fest miteinander verbunden werden, z.B. durch Schweißen.

Aufgabe der Erfindung ist es, ein Bauteilverbindungskonzept zu schaffen, mittels dem Bleche, insbesondere Karosseriebleche von Fahrzeugen sowie Anbauteile, einfach (vor-)montiert werden können.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt der Erfindung ist eine Bauteilverbindung, welche ein erstes Fahrzeugbauteil mit einem zweiten Fahrzeugbauteil verbindet. Der Begriff "Fahrzeugbauteil" ist äußerst breit zu interpretieren. Er umfasst prinzipiell alle Arten von Bauteilen, die es bei einem Fahrzeug zu verbinden gilt, insbesondere Karosseriebauteile.

Das erste der beiden Fahrzeugbauteile weist ein vom ersten Fahrzeugbauteil abstehendes, "männliches Fixierelement" auf, das teilweise oder ganz die Form einer Kugel bzw. Kalotte oder ganz oder teilweise eine kugelähnliche Form hat. Der Begriff "kugelähnlich" ist ebenfalls sehr breit zu interpretieren und nicht auf den mathematischen Begriff einer Kugelgeometrie beschränkt. Kugelähnlich kann z.B. "konvex gewölbt" bedeuten. Vorzugsweise ist das kugelförmige oder kugelähnlich gestaltete männliche Fixierelement rotationssymmetrisch bezüglich einer Normalenrichtung eines oder beider Fahrzeugbauteile an der Stelle des männlichen Fixierelements. Die Begriffe "kugelartig" oder "kugelähnlich" umfassen ganz allgemein "runde" bzw. "gewölbte", insbesondere "konvex gewölbte" Geometrien". Ein derart gestaltetes männliches Fixierelement kann sehr einfach mit dem zweiten Fahrzeugbauteil zusammengesteckt werden. Durch eine runde, kantenlose Geometrie des männlichen Fixierelements minimiert sich die Gefahr, dass sich die beiden Fahrzeugbauteile beim Zusammenstecken ungewollt verkannten.

Das zweite Fahrzeugbauteil weist ein zur Aufnahme des männlichen Fixierelements vorgesehenes "weibliches Fixierelement" auf. Der Begriff "weibliches Fixierelement" ist ebenfalls äußerst breit auszulegen. Gemeint sind konstruktive Gestaltungen, die es ermöglichen, das männliche Fixierelement in einer Einführrichtung in das weibliche Fixierelement einzuführen.

Ein wesentlicher Gedanke der Erfindung besteht darin, dass das männliche Fixierelement ein Übermaß in Bezug auf das weibliche Fixierelement aufweist. Das Übermaß kann insbesondere in einer Richtung, die quer zur Einführrichtung ist, bestehen. Aufgrund des Übermaßes werden die beiden Fahrzeugbauteile beim Zusammenstecken an den Fixierelementen lösbar aneinandergeklemmt.

Die Fahrzeugbauteile können also, ähnlich wie dies von Steckbaukästen aus dem Spielwarenbereich bekannt ist, einfach zusammengesteckt und auf diese Weise relativ zueinander (vor-)fixiert werden.

Fahrzeugbauteile, wie z.B. einzelne Karosserieteile, können durch ein oder mehrere derartige Bauteilverbindungen miteinander verbunden, d.h. (vor-)montiert werden. Die einzelnen Bauteile brauchen dabei lediglich "zusammengesteckt" werden. Je nach Art der Fahrzeugbauteile und der konstruktiv vorgesehenen "Klemmkraft" werden die beiden Fahrzeugbauteile zusätzlich über eine Schweißverbindung miteinander verbunden. In Betracht kommen dabei insbesondere auch solche Verbindungstechniken, die von einer einzigen Bauteilseite her herstellbar sind ("einseitige Verbindungsverfahren"). Exemplarisch sei hier das Laserschweißen genannt, bei dem im Unterschied zu Punktschweißverfahren der "Bauteilverbund" nicht von beiden Seiten her mittels einer Schweißzange zugänglich sein muss, sondern von einer einzigen Seite her gearbeitet werden kann.

Ein Formschluss in Einführrichtung zwischen den Fixierelementen kann vorgesehen sein. Ein derartiger Formschluss muss aber nicht notwendigerweise vorgesehen sein. Anders ausgedrückt muss nicht unbedingt ein Hinterschnitt des männlichen und des weiblichen Fixierelements vorgesehen sein.

Das weibliche Fixierelement kann durch ein in dem zweiten Fahrzeugbauteil vorgesehenes "Durchgangsloch" gebildet sein. Der Begriff "Durchgangsloch" ist breit zu interpretieren und nicht per se auf eine bestimmte Lochgeometrie beschränkt. Das Durchgangsloch kann z.B. kreisförmig sein oder eine von einer Kreisform abweichende Geometrie aufweisen, wie z.B. eine im Wesentlichen quadratische Geometrie, eine drei-, vier- oder mehreckförmige Geometrie, wobei die "Ecken" gerundet sein können.

Da das männliche Fixierelement quer zur Einführrichtung ein gewisses Übermaß in Bezug auf das weibliche Fixierelement aufweist, müssen die beiden Fixierelemente - oder zumindest eines der beiden Fixierelemente - eine gewisse "Mindestelastizität" aufweisen, so dass das Zusammenstecken ermöglicht wird und nach dem Zusammenstecken eine hinreichende Klemmkraft bestehen bleibt.

Bei dem männlichen Fixierelement kann es sich z.B. um eine Kugel aus Vollmaterial handeln, insbesondere um eine Stahl- oder Aluminiumkugel. Eine derartige "Vollkugel" weist eine vergleichsweise geringe Elastizität auf. Die für ein Zusammenstecken erforderliche Mindestelastizität kann dann durch eine entsprechende Gestaltung des weiblichen Fixierelements erreicht werden.

Gemäß der Erfindung ist vorgesehen, dass die beiden Fahrzeugbauteile nach dem Zusammenstecken an den Fixierelementen in Richtungen, die quer zur Einführrichtung sind, spielfrei miteinander verbunden, d.h. unverschieblich relativ zueinander fixiert sind.

Wie bereits erwähnt, können die beiden Fahrzeugbauteile über mehrere derartige oder ähnliche Bauteilverbindungen aneinander (vor-)fixiert werden. Dementsprechend kann an einem der beiden Fahrzeugbauteile mindestens ein weiteres männliches Fixierelement vorgesehen sein, das ebenfalls teilweise oder ganz die Form einer Kugel bzw. teilweise oder ganz eine kugelähnliche Form hat und das in einer bzw. in derselben Einführrichtung wie das erste männliche Fixierelement in ein zugeordnetes weiteres weibliches Fixierelement eingeführt werden kann bzw. eingeführt ist, das an dem betreffenden anderen Fahrzeugbauteil vorgesehen ist.

Das mindestens eine weitere weibliche Fixierelement kann durch einen Schlitz bzw. durch ein längliches Durchgangsloch gebildet sein, in dem das weitere männliche Fixierelement in einer Längsrichtung des Schlitzes bzw. des länglichen Durchgangslochs verschieblich ist.

Anschaulich gesprochen bildet somit die eine "Bauteilverbindung" ein "Festlager" und die mindestens eine weitere Bauteilverbindung ein "Loslager". Dies hat den Vorteil, dass die beiden miteinander zu verbindenden Fahrzeugbauteile "schwimmend" und somit im Wesentlichen spannungsfrei zusammengesteckt bzw. aneinander fixiert werden können.

Gemäß der Erfindung sind an einem Rand des das weibliche Fixierelement bildenden Durchgangslochs mehrere von dem zweiten Fahrzeugbauteil abstehende, biegeelastische Klemmelemente vorgesehen. Die Klemmelemente üben von außen her eine im Wesentlichen quer zur Einführrichtung wirkende Klemmkraft auf eine Außenseite des männlichen Fixierelements aus. Gemäß der Erfindung hintergreifen die Klemmelemente das männliche Fixierelement. Aufgrund eines sich dadurch ergebenden Hinterschnitts kommt es beim Zusammenfügen, d.h. beim Zusammenstecken der beiden Fixierelemente zu einem "Überdrücken" und somit zu einem hörbaren Einrasten des männlichen Fixierelements in bzw. an dem weiblichen Fixierelement.

Gemäß der Erfindung können entlang des Durchgangslochs mehrere in Umfangsrichtung voneinander beabstandete Klemmkrägen vorgesehen sein, die das männliche Fixierelement jeweils auf einem Umfangsabschnitt oder jeweils an einer Umfangsstelle von außen her berühren. Es kann auch vorgesehen sein, dass lediglich ein Teil der vorgesehenen Klemmkrägen von außen her gegen das männliche Fixierelement drückt.

Es kann vorgesehen sein, dass die Klemmkrägen in Einführrichtung bzw. entgegen der Einführrichtung von dem zweiten Fahrzeugbauteil abstehen. Die Klemmkrägen müssen nicht ganz senkrecht in Bezug auf das zweite Fahrzeugteil umgebogen werden, sondern können leicht schräg angestellt werden. Beispielsweise kann vorgesehen sein, dass die mindestens Klemmkrägen mit der Oberfläche des zweiten Fahrzeugbauteils im Bereich des Durchgangslochs einen Winkel einschließen, der im Bereich zwischen 80° und 90° liegt.

Bei dem ersten und/oder bei dem zweiten Fahrzeugbauteil kann es sich um ein Blechbauteil, insbesondere um ein Karosseriebauteil handeln. Das das weibliche Fixierelement bildende Durchgangsloch kann aus dem zweiten Fahrzeugbauteil ausgestanzt sein. Bei den Klemmkrägen kann es sich um "umgebogene" bzw. "hochgestellte" Abschnitte des ausgestanzten Durchgangslochs handeln.

Bei einem oder bei beiden der Fahrzeugteile kann es sich insbesondere um Tiefziehteile handeln. Das mindestens eine weibliche Fixierelement, das z.B. durch ein Durchgangsloch gebildet sein kann, kann unmittelbar im Tiefziehwerkzeug ausgestanzt oder in einem nachfolgenden Fertigungsschritt hergestellt werden.

Im Folgenden wird die Erfindung im Zusammenhang mit der Zeichnung näher erläutert. Es zeigen:
- Figur 1: Ein Blech mit einer aufgeschweißten Stahlkugel;
- Figuren 2, 3: ein Blech mit einem Durchgangsloch mit umlaufenden Klemmkragen (Fig. 2 und 3 sind nicht Gegenstand der Patentansprüche);
- Figuren 4-6: verschiedene Ausführungsbeispiele mit unterschiedlichen Klemmkrägen (Fig. 4 ist nicht Gegenstand der Patentansprüche); und
- Figur 7: zwei schwimmend aneinander fixierte Bauteile (Fig. 7 ist nicht Gegenstand der Patentansprüche).

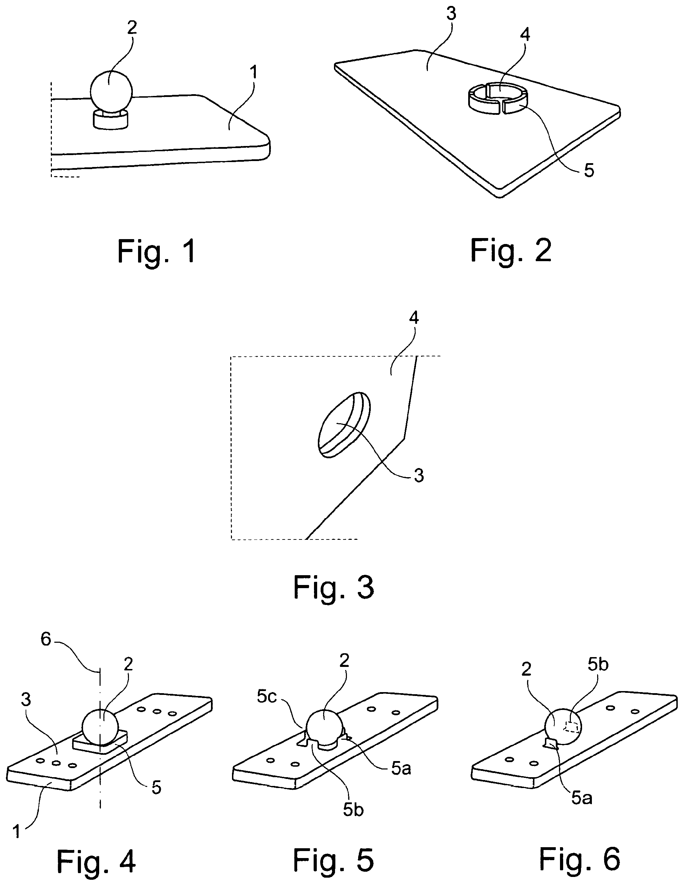

Figur 1 zeigt ein erstes Blech 1, auf das eine Stahlkugel 2 aufgeschweißt ist.

Die Figuren 2, 3 zeigen ein zweites Blech 3, in das ein Durchgangsloch 4 gestanzt ist, welches einen umgebogenen Kragen 5 aufweist, der als Klemmkragen fungiert. Das Durchgangsloch 4 bzw. der Klemmkragen 5 haben einen geringfügig kleineren Durchmesser als die Kugel 2. Der Klemmkragen ist jedoch hinreichend elastisch, so dass die Kugel in das Durchgangsloch 4 gesteckt werden kann.

Das Durchgangsloch 4 kann, wie in den Figuren 2, 3 gezeigt, eine annähernd viereckige bzw. quadratische Form haben. Im Falle einer annähernd quadratischen Druchgangslochgeometrie, drückt der Klemmkragen 5 punktförmig an vier jeweils ca. 90° voneinander beabstandeten Stellen von außen her gegen die Kugel 2.

Figur 4 zeigt die beiden Bleche 1, 3 in zusammengestecktem Zustand. Die an dem Blech 1 fixierte Kugel wurde von unten her durch das Durchgangsloch 4 hindurchgesteckt. Der Klemmkragen 5 drückt im Wesentlichen quer zu einer Einführrichtung 6 von außen her gegen die Kugel 2. Die beiden Bleche 1, 3 sind damit in Richtungen, die quer zur Einführvorrichtung 6 sind, fest und im Wesentlichen spielfrei relativ zueinander positioniert.

Figur 5 zeigt ein Ausführungsbeispiel, bei dem anstatt eines umlaufenden Klemmkragens in Umfangsrichtung gleichmäßig verteilt mehrere zahnartige Klemmkragenelemente 5a, 5b, 5c vorgesehen sind.

Beim Ausführungsbeispiel der Figur 6 sind lediglich zwei derartige zahnartige Klemmkragenelemente 5a, 5b vorgesehen, die in Umfangsrichtung ca. 180° voneinander beabstandet sind. Die beiden Klemmkragenelemente 5a, 5b sind auf einander gegenüberliegenden Seiten der Kugel 2 angeordnet.

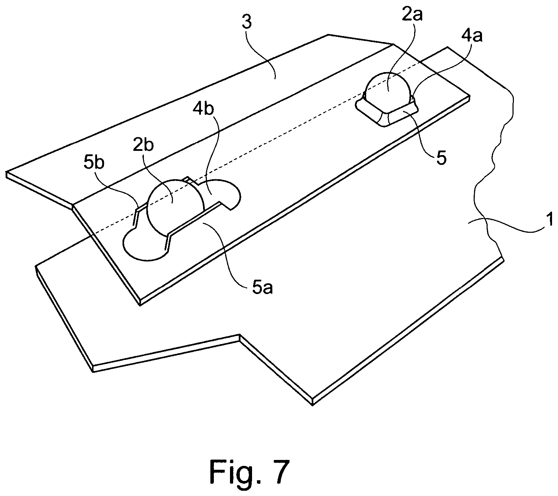

Figur 7 zeigt ein Ausführungsbeispiel, bei dem auf einem ersten Blech 1 beabstandet voneinander eine erste Kugel 2a und eine zweite Kugel 2b angeordnet sind. Die beiden Kugeln 2a, 2b können auf das Blech 1 aufgeschweißt sein.

In dem zweiten Blech 3 ist ein erstes der Kugel 2a zugeordnetes rechteckiges bzw. quadratisches Durchgangsloch 4a vorgesehen, das einen umlaufenden Klemmkragen 5 aufweist, ähnlich wie er in den Figuren 2 - 4 gezeigt ist. Im Bereich der Kugel 2a sind die beiden Bleche 1, 3 somit fest quer zur Einführrichtung relativ zueinander fixiert.

Bei dem zweiten Durchgangsloch 4b hingegen handelt es sich um ein längliches Durchgangsloch, mit zwei in Lochlängsrichtung verlaufenden Klemmkrägen 5a, 5b, die voneinander gegenüberliegenden Seiten her gegen die Außenseite der Kugel 2b drücken. Bei der in Figur 7 gezeigten Anordnung sind die Bleche "schwimmend" aneinander fixiert. Durch das Langloch 4b werden Spannungen zwischen den Befestigungsstellen vermieden.

Die beiden Bleche 1, 3 können einfach zusammengesteckt und anschließend z.B. durch Schweißen dauerhaft fest miteinander verbunden werden. Die beim Schweißen auftretenden Wärmedehnungen werden aufgrund der schwimmenden Anordnung der beiden Bleche "automatisch" ausgeglichen.

## Patentansprüche

1. Bauteilverbindung, mit
• einem ersten Fahrzeugbauteil (1), das ein von dem ersten Fahrzeugbauteil (1) abstehendes, männliches Fixierelement (2) aufweist, das teilweise oder ganz die Form einer Kugel oder ganz oder teilweise eine kugelähnliche Form hat,
• einem zweiten Fahrzeugbauteil (3), das ein zur Aufnahme des männlichen Fixierelements (2) vorgesehenes, weibliches Fixierelement (4, 5) aufweist, welches durch ein in dem zweiten Fahrzeugbauteil (3) vorgesehenes Durchgangsloch (4) gebildet ist, wobei
o∘ das männliche Fixierelement (2) in einer Einführrichtung (6) in das weibliche Fixierelement (4, 5) eingeführt ist,
∘ das männliche Fixierelement (2) im Wesentlichen quer zur Einführrichtung (6) ein Übermaß in Bezug auf das weibliche Fixierelement (4, 5) aufweist, so dass die beiden Bauteile (1, 3) an den Fixierelementen (2, 4, 5) aneinander geklemmt sind,
• an einem Rand des Durchgangslochs (4, 4a, 4b) mehrere zahnartige von dem zweiten Bauteil (3) abstehende, biegeelastische Klemmelemente (5, 5a, 5b, 5c) vorgesehen sind, die im aneinander geklemmten Zustand von außen her eine im Wesentlichen quer zur Einführrichtung (6) wirkende Klemmkraft auf eine Außenseite des männlichen Fixierelements (2, 2a, 2b) ausüben und
• die beiden Bauteile (1, 3) im Bereich der beiden Fixierelemente in Richtungen quer zur Einführrichtung (6) unverschieblich relativ zueinander fixiert sind, wobei es sich bei dem ersten und/oder bei dem zweiten Fahrzeugbauteil um ein Karosseriebauteil handelt,
**dadurch gekennzeichnet, dass**
die Klemmelemente (5, 5a, 5b, 5c) das männliche Fixierelement (2, 2a, 2b) hintergreifen, wodurch sich ein Hinterschnitt ergibt, durch den das männliche Fixierelement (2, 2a, 2b) in oder an dem weiblichen Fixierelement (4, 5) eingerastet ist und
die beiden Fahrzeugbauteile (1, 3) zusätzlich zu der mindestens einen lösbaren Klemmverbindung über eine Schweißverbindung unmittelbar fest miteinander verbunden sind.

2. Bauteilverbindung nach Anspruch 1,
**dadurch gekennzeichnet, dass** das Durchgangsloch (4) eine von einer Kreisform abweichende Form hat.

3. Bauteilverbindung nach einem der Ansprüche 1 oder 2,
**dadurch gekennzeichnet, dass** die Form des Durchgangslochs (4) einem Quadrat oder einem Dreieck ähnelt.

4. Bauteilverbindung nach einem der Ansprüche 1 bis 3, **dadurch gekennzeichnet, dass** ein weiteres männliches Fixierelement (2b) vorgesehen ist, das teilweise oder ganz die Form einer Kugel oder teilweise oder ganz eine kugelähnliche Form hat und das in einer bzw. in derselben Einführrichtung (6) ein zugeordnetes weiteres weibliches Fixierelement (4b) eingeführt ist.

5. Bauteilverbindung nach Anspruch 4,
**dadurch gekennzeichnet, dass** das weitere weibliche Fixierelement (4b) durch einen Schlitz bzw. durch ein längliches Durchgangsloch gebildet ist, in dem das weitere männliche Fixierelement (2b) in einer Längsrichtung des Schlitzes bzw. des länglichen Durchgangsloch verschiebbar ist.

6. Bauteilverbindung nach einem der Ansprüche 1 bis 5,
**dadurch gekennzeichnet, dass** die Klemmelemente (5, 5a, 5b, 5c) Klemmkrägen sind, in Einführrichtung (6) bzw. entgegen der Einführrichtung (6) von dem zweiten Fahrzeugbauteil (3) abstehen.

7. Bauteilverbindung nach einem der Ansprüche 1 bis 6,
**dadurch gekennzeichnet, dass** es sich bei dem ersten und/oder bei dem zweiten Fahrzeugbauteil um ein Blechbauteil, insbesondere um ein Stahl- oder Aluminiumblechbauteil, handelt.

8. Bauteilverbindung nach einem der Ansprüche 1 bis 7,
**dadurch gekennzeichnet, dass** das Durchgangsloch (4, 4a, 4b) aus dem zweiten Fahrzeugbauteil (3) ausgestanzt ist.

9. Bauteilverbindung nach einem der Ansprüche 1 bis 8,
**dadurch gekennzeichnet, dass** es sich bei den Klemmelementen (5, 5a, 5b, 5c) um ein umgebogene Abschnitte des zweiten Fahrzeugbauteils (3) handelt.

10. Bauteilverbindung nach einem Ansprüche 1 bis 9,
**dadurch gekennzeichnet, dass** es sich bei dem männlichen Fixierelement um ein vollständig aus Metall, insbesondere aus Stahl oder Aluminium bestehendes Element handelt.

11. Bauteilverbindung nach einem der Ansprüche 1 bis 10,
**dadurch gekennzeichnet, dass** das männliche Fixierelement (2, 2a, 2b) stoffschlüssig mit dem ersten Fahrzeugbauteil (1) verbunden ist, insbesondere dass das männliche Fixierelement (2, 2a, 2b) an das erste Fahrzeugbauteil (1) angeschweißt ist.

## Claims

1. Component connection, comprising
• a first vehicle component (1) having a male fixing element (2) which protrudes from the first vehicle component (1) and which partially or entirely has the shape of a sphere or entirely or partially has a shape similar to a sphere,
• a second vehicle component (3) having a female fixing element (4, 5) which is provided for receiving the male fixing element (2) and which is formed by a passage hole (4) provided in the second vehicle component (3), wherein
∘ the male fixing element (2) is introduced into the female fixing element (4, 5) in an introduction direction (6),
∘ the male fixing element (2) has an oversize in relation to the female fixing element (4, 5) substantially transversely to the introduction direction (6), so that the two components (1, 3) are clamped together at the fixing elements (2, 4, 5),
• provision being made at a periphery of the passage hole (4, 4a, 4b) of multiple tooth-like, flexurally elastic clamping elements (5, 5a, 5b, 5c) which protrude from the second component (3) and which, in the clamped-together state, exert on an outer side of the male fixing element (2, 2a, 2b) from the outside a clamping force which acts substantially transversely to the introduction direction (6), and
• the two components (1, 3) being fixed in the region of the two fixing elements so as not to be displaceable relative to one another in directions transverse to the introduction direction (6), wherein the first and/or the second vehicle component is a body component,
**characterized in that** the clamping elements (5, 5a, 5b, 5c) engage behind the male fixing element (2, 2a, 2b), whereby there is formed an undercut by way of which the male fixing element (2, 2a, 2b) is latched into place in or on the female fixing element (4, 5), and
the two vehicle components (1, 3), in addition to the at least one releasable clamping connection, are directly connected fixedly to one another via a welded connection.

2. Component connection according to Claim 1,
**characterized in that** the passage hole (4) has a shape deviating from the shape of a circle.

3. Component connection according to either of Claims 1 and 2,
**characterized in that** the shape of the passage hole (4) is similar to a square or a triangle.

4. Component connection according to one of Claims 1 to 3,
**characterized in that** provision is made of a further male fixing element (2b) which partially or entirely has the shape of a sphere or partially or entirely has a shape similar to a sphere and which is introduced into an associated further female fixing element (4b) in an or in the same introduction direction (6).

5. Component connection according to Claim 4,
**characterized in that** the further female fixing element (4b) is formed by a slot or by an elongate passage hole in which the further male fixing element (2b) is displaceable in a longitudinal direction of the slot or of the elongate passage hole.

6. Component connection according to one of Claims 1 to 5,
**characterized in that** the clamping elements (5, 5a, 5b, 5c) are clamping collars, and these protrude from the second vehicle component (3) in the introduction direction (6) or counter to the introduction direction (6).

7. Component connection according to one of Claims 1 to 6,
**characterized in that** the first and/or the second vehicle component is a sheet-metal component, in particular a steel or aluminium sheet-metal component.

8. Component connection according to one of Claims 1 to 7,
**characterized in that** the passage hole (4, 4a, 4b) is punched out of the second vehicle component (3).

9. Component connection according to one of Claims 1 to 8,
**characterized in that** the clamping elements (5, 5a, 5b, 5c) are bent-over portions of the second vehicle component (3).

10. Component connection according to one of Claims 1 to 9,
**characterized in that** the male fixing element is an element consisting entirely of metal, in particular of steel or aluminium.

11. Component connection according to one of Claims 1 to 10,
**characterized in that** the male fixing element (2, 2a, 2b) is connected in a materially bonded manner to the first vehicle component (1), in particular **in that** the male fixing element (2, 2a, 2b) is welded to the first vehicle component (1).

## Revendications

1. Liaison de composants, avec
• un premier composant de véhicule (1), qui comporte un élément de fixation mâle (2) dépassant du premier composant de véhicule (1), qui présente en partie ou en totalité la forme d'une sphère ou en totalité ou en partie une forme similaire à une sphère,
• un second composant de véhicule (3), qui comporte un élément de fixation femelle (4, 5) prévu pour recevoir l'élément de fixation mâle (2), lequel est formé par un trou de passage (4) prévu dans le second composant de véhicule (3),
∘ l'élément de fixation mâle (2) étant introduit dans l'élément de fixation femelle (4, 5) dans une direction d'introduction (6),
∘ l'élément de fixation mâle (2) comportant, sensiblement de manière transversale par rapport à la direction d'introduction (6), une surdimension par rapport à l'élément de fixation femelle (4, 5) de telle sorte que les deux composants (1, 3) sont serrés l'un sur l'autre sur les éléments de fixation (2, 4, 5),
• plusieurs éléments de serrage (5, 5a, 5b, 5c) élastiques en flexion de type dent, dépassant du second composant (3) étant prévus sur un bord du trou de passage (4, 4a, 4b), qui exercent, dans l'état serré les uns sur les autres, depuis l'extérieur, une force de serrage agissant sensiblement de manière transversale par rapport à la direction d'introduction (6) sur un côté extérieur de l'élément de fixation mâle (2, 2a, 2b), et
• les deux composants (1, 3) étant fixés sans pouvoir coulisser l'un par rapport à l'autre dans des directions transversales par rapport à la direction d'introduction (6) dans la zone des deux éléments de fixation, le premier et/ou le second composant de véhicule étant un composant de carrosserie,
**caractérisée en ce que** les éléments de serrage (5, 5a, 5b, 5c) viennent en prise par l'arrière avec l'élément de fixation mâle (2, 2a, 2b), ce qui permet de donner lieu à une contre-dépouille, à travers laquelle l'élément de fixation mâle (2, 2a, 2b) est enclenché dans ou sur l'élément de fixation femelle (4, 5), et
les deux composants (1, 3) sont reliés de manière directement solidaire l'un à l'autre par l'intermédiaire d'une liaison par soudage en plus de l'au moins une liaison par serrage amovible.

2. Liaison de composants selon la revendication 1, **caractérisée en ce que** le trou de passage (4) présente une forme divergeant d'une forme circulaire.

3. Liaison de composants selon l'une des revendications 1 ou 2,
**caractérisée en ce que** la forme du trou de passage (4) ressemble à un carré ou à un triangle.

4. Liaison de composants selon l'une des revendications 1 à 3,
**caractérisée en ce qu'**est prévu un autre élément de fixation mâle (2b), qui présente en partie ou en totalité la forme d'une sphère ou en partie ou en totalité une forme similaire à une sphère et un autre élément de fixation femelle (4b) associé est introduit dans une ou dans la même direction d'introduction (6).

5. Liaison de composants selon la revendication 4, **caractérisée en ce qu'**un autre élément de fixation femelle (4b) est formé par une entaille ou par un trou de passage allongé, dans lequel l'élément de fixation mâle (2b) peut être coulissé dans une direction longitudinale de l'entaille ou du trou de passage allongé.

6. Liaison de composants selon l'une des revendications 1 à 5,
**caractérisée en ce que** les éléments de serrage (5, 5a, 5b, 5c) sont des rebords de serrage, dépassent du second composant de véhicule (3) dans la direction d'introduction (6) ou à l'opposé de la direction d'introduction (6).

7. Liaison de composants selon l'une des revendications 1 à 6,
**caractérisée en ce que** le premier et/ou le second composant de véhicule est un composant en tôle, en particulier un composant en tôle d'acier ou d'aluminium.

8. Liaison de composants selon l'une des revendications 1 à 7,
**caractérisée en ce que** le trou de passage (4, 4a, 4b) est découpé du second composant de véhicule (3).

9. Liaison de composants selon l'une des revendications 1 à 8,
**caractérisée en ce que** les éléments de serrage (5, 5a, 5b, 5c) sont une section repliée du second composant de véhicule (3).

10. Liaison de composants selon l'une des revendications 1 à 9,
**caractérisée en ce que** l'élément de fixation mâle est un élément totalement constitué de métal, en particulier d'acier ou d'aluminium.

11. Liaison de composants selon l'une des revendications 1 à 10,
**caractérisée en ce que** l'élément de fixation mâle (2, 2a, 2b) est relié par liaison de matière au premier composant de véhicule (1), en particulier que l'élément de fixation mâle (2, 2a, 2b) est soudé sur le premier composant de véhicule (1).
